(19) Europäisches Patentamt

European Patent Office

Office européen des brevets

(11) **EP 0 848 237 B1**

(12) **EUROPÄISCHE PATENTSCHRIFT**

(45) Veröffentlichungstag und Bekanntmachung des Hinweises auf die Patenterteilung:
**23.08.2006 Patentblatt 2006/34**

(51) Int Cl.:
*G01F 23/296* (2006.01)

(21) Anmeldenummer: **97120278.3**

(22) Anmeldetag: **19.11.1997**

(54) **Vorrichtung zur Überwachung eines vorbestimmten Füllstands in einem Behälter**

Device monitoring a predetermined filling level in a container

Dispositif de surveillance d'un niveau prédéterminé de remplissage dans un réservoir

(84) Benannte Vertragsstaaten:
**DE FR GB IT**

(30) Priorität: **10.12.1996 DE 19651362**

(43) Veröffentlichungstag der Anmeldung:
**17.06.1998 Patentblatt 1998/25**

(73) Patentinhaber: **Endress + Hauser GmbH + Co. KG**
**79689 Maulburg (DE)**

(72) Erfinder: **Pfeiffer, Helmut**
**78585 Steinen (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**DE-A- 1 498 548    DE-A- 3 011 603**
**DE-A- 3 833 896    DE-A- 3 912 038**
**DE-A- 4 327 167**

## Beschreibung

Die Erfindung betrifft eine Vorrichtung zur Überwachung eines vorbestimmten Füllstands in einem Behälter, mit einem durch ein mechanisches Schwingsystem gebildeten Sensor, der zwei Schwingstäbe aufweist, von denen wenigstens der eine Schwingstab rohrförmig ist und den anderen Schwingstab koaxial umschließt, wobei jeder der beiden Schwingstäbe über ein als Rückstellfeder wirkendes elastisches Halteteil an einem gemeinsamen Träger so befestigt ist, daß er Schwingungen quer zu seiner Längsrichtung ausführen kann, einer Erregungsanordnung, die die beiden Schwingstäbe in gegensinnige transversale Schwingungen mit der Eigenresonanzfrequenz des mechanischen Schwingsystems versetzt, und mit einer Auswerteschaltung zur Auslösung von Anzeige- oder Schaltvorgängen in Abhängigkeit von der Schwingungsamplitude des mechanischen Schwingsystems des Sensors.

Eine Vorrichtung dieser Art ist beispielsweise aus der DE 30 11 603 A1 bekannt. Jeder Schwingstab bildet mit dem als Rückstellfeder wirkenden elastischen Halteteil ein mechanisches Schwingungsgebilde, dessen Eigenresonanzfrequenz durch das Massenträgheitsmoment des Schwingstabs und die Federkonstante des elastischen Halteteils bestimmt ist. Die beiden mechanischen Schwingungsgebilde sind so ausgebildet, daß sie die gleiche Eigenresonanzfrequenz haben, die zugleich die Eigenresonanzfrequenz des gesamten mechanischen Schwingsystems ist. Ihre gegensinnigen Schwingungen haben dann bei gegebener Erregungsleistung eine maximale Schwingungsamplitude, wenn der äußere Schwingstab in Luft schwingt. Wenn dagegen der äußere Schwingstab von dem Füllgut bedeckt wird, dessen Füllstand überwacht werden soll, werden die Schwingungen des mechanischen Schwingsystems gedämpft, so daß ihre Amplitude kleiner wird oder die Schwingung sogar ganz abreißt. Aufgrund der unterschiedlichen Schwingungsamplituden kann die Auswerteschaltung daher feststellen, ob das Füllgut den zu überwachenden Füllstand erreicht hat oder nicht.

Bei den bekannten Vorrichtungen dieser Art besteht das Problem, daß die Eigenresonanzfrequenz des von dem äußeren Schwingstab gebildeten mechanischen Schwingungsgebildes verändert wird, wenn sich ein Ansatz von Füllgut an dem äußeren Schwingstab bildet, weil dadurch das Massenträgheitsmoment des äußeren Schwingstabs vergrößert wird, wogegen die Eigenresonanzfrequenz des von dem inneren Schwingstab gebildeten mechanischen Schwingungsgebildes unverändert bleibt. Die beiden mechanischen Schwingungsgebilde sind dann nicht mehr aufeinander abgestimmt, was zur Folge hat, daß die Schwingungsamplitude des mechanischen Schwingsystems kleiner wird. Es besteht dann die Gefahr, daß die Auswerteschaltung nicht erkennen kann, ob die Verringerung der Schwingungsamplitude durch eine Ansatzbildung verursacht wird, obwohl der äußere Schwingstab in Luft schwingt, oder darauf beruht, daß der äußere Schwingstab von dem Füllgut bedeckt ist. Dies kann zu Fehlanzeigen führen.

Aufgabe der Erfindung ist die Schaffung einer Vorrichtung der eingangs angegebenen Art, die unabhängig von Ansatzbildungen stets mit maximaler Amplitude in Luft schwingt und daher durch Verringerung der Schwingungsamplitude eindeutig erkennen läßt, daß der zu überwachende Füllstand erreicht ist.

Diese Aufgabe wird mittels einer Vorrichtung gemäß Anspruch 1 gelöst, und insbesondere dadurch daß an wenigstens einem der Schwingstäbe eine Kompensationsmasse in der Längsrichtung des Schwingstabs verstellbar angeordnet ist, und daß eine Einstellvorrichtung zur Verstellung der Kompensationsmasse vorgesehen ist.

Bei der erfindungsgemäßen Vorrichtung erfolgt durch Verstellung der Kompensationsmasse ein selbsttätiger Abgleich der Eigenresonanzfrequenz der beiden mechanischen Schwingungsgebilde, so daß diese stets gleiche Eigenresonanzfrequenzen haben, selbst wenn die Eigenresonanzfrequenz eines Schwingungsgebildes durch Ansatzbildung oder andere Einflüsse verändert wird. Die optimale Einstellung, bei der die beiden Schwingungsgebilde gleiche Eigenresonanzfrequenzen haben, ist daraus zu erkennen, daß die Schwingungsamplitude des mechanischen Schwingsystems ein Maximum erreicht.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels, das in der Zeichnung dargestellt ist. In der Zeichnung zeigen:

Fig. 1 eine Vorrichtung zur Überwachung eines vorbestimmten Füllstands in einem Behälter, deren mechanisches Schwingsystem mit zwei koaxial angeordneten Schwingstäben im Schnitt dargestellt ist, und

Fig. 2 ein Blockschaltbild der Erregungs- und Auswerteschaltung der Vorrichtung von Fig. 1.

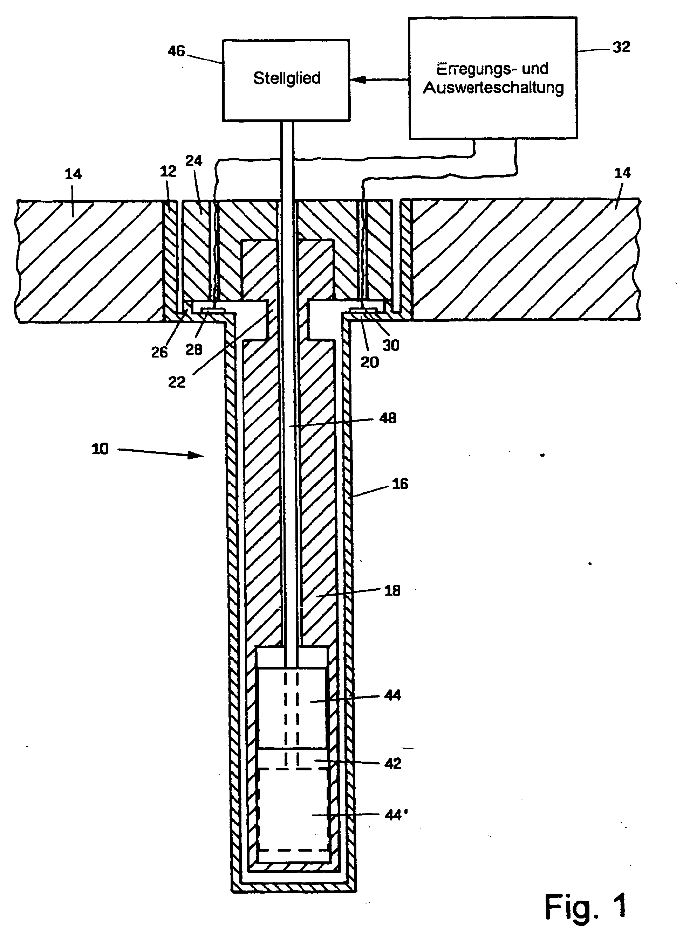

Die in Fig. 1 der Zeichnung dargestellte Vorrichtung hat einen Sensor 10, der mittels eines Befestigungsteils 12 in einer Öffnung einer Wand 14 eines Behälters befestigt ist, in welchem sich ein Füllgut befindet, dessen Füllstand durch die Vorrichtung überwacht werden soll. Der Sensor 10 weist einen äußeren rohrförmigen Schwingstab 16 und einen koaxial in dessen Innerem angeordneten inneren Schwingstab 18 auf. Der Sensor 10 ist so an der Behälterwand 14 befestigt, daß die Schwingstäbe 16, 18 in das Innere des Behälters ragen und der äußere Schwingstab 16 mit dem Füllgut in Berührung kommt, wenn dieses den zu überwachenden Füllstand erreicht.

Das der Behälterwand 14 zugewandte Ende des äußeren Schwingstabs 16 ist mit dem Befestigungsteil 12 durch eine elastische ringförmige Membran 20 verbunden, so daß der äußere Schwingstab 16 Schwingungen quer zu seiner Längsrichtung ausführen kann, wobei die Membran 20 als Rückstellfeder wirkt. Die Eigenresonanzfrequenz des von dem äußeren Schwingstab 16 und der Membran 20 gebildeten äußeren Schwingungsgebildes ist durch das Massenträgheitsmoment $\theta_a$ des äußeren Schwingstabs 16 und die Federkonstante $C_a$ der Membran 20 bestimmt. Der innere Schwingstab 18 ist durch eine elastische Einschnürung 22 mit einem Halteblock 24 verbunden, so daß der innere Schwingstab 18 Schwingungen quer zu seiner Längsrichtung ausführen kann, wobei die Einschnürung 22 als Rückstellfeder wirkt. Die Eigenresonanzfrequenz des von dem inneren Schwingstab 18 und der Einschnürung 22 gebildeten inneren Schwingungsgebildes ist durch das Massenträgheitsmoment $\theta_i$ des inneren Schwingstabs 18 und die Federkonstante Ci der Einschnürung 22 bestimmt. Das äußere Schwingungsgebilde 16, 20 und das innere Schwingungsgebilde 18, 22 bilden zusammen das mechanische Schwingsystem des Sensors 10. Die beiden Schwingungsgebilde sind dadurch miteinander gekoppelt, daß der Halteblock 24 rings um seinen Umfang durch ein ringförmiges Verbindungsteil 26 mit der Membran 20 verbunden ist. Wenn eines der beiden Schwingungsgebilde in Eigenresonanzschwingungen versetzt wird, wird infolge dieser Kopplung das andere Schwingungsgebilde in gegenphasige Schwingungen versetzt, wenn die beiden Schwingungsgebilde richtig aufeinander abgestimmt sind, so daß sie gleiche Eigenresonanzfrequenzen haben, d.h. wenn gilt:

$$c_a = c_i$$

$$\theta_a = \theta_i$$

In diesem Fall ist das Reaktionsdrehmoment, das von dem äußeren Schwingungsgebilde 16, 20 auf die Einspannung des Befestigungsteils 12 in der Behälterwand 14 ausgeübt wird, entgegengesetzt gleich dem Reaktionsdrehmoment, das von dem inneren Schwingungsgebilde 18, 20 auf diese Einspannung ausgeübt wird, und in gleicher Weise sind auch die durch die beiden Schwingungsgebilde auf die Behälterwand 14 ausgeübten Reaktionskräfte entgegengesetzt gleich groß. Die Reaktionsdrehmomente und die Reaktionskräfte heben sich daher gegenseitig auf, so daß keine Schwingungsenergie auf die Behälterwand übertragen wird.

Die Erregung der Schwingungen des mechanischen Schwingsystems erfolgt elektrisch mittels elektromechanischer Wandler. Bei dem dargestellten Ausführungsbeispiel sind zu diesem Zweck auf der Membran 20 ein piezoelektrischer Erregungswandler 28 und ein piezoelektrischer Empfangswandler 30 angebracht. Jeder piezoelektrische Wandler besteht in an sich bekannter Weise aus einer flachen piezoelektrischen Keramikscheibe, die auf beiden Seiten mit Metallbelägen versehen ist, die als Elektroden dienen. Der eine Metallbelag jedes piezoelektrischen Wandlers ist elektrisch leitend mit der Membran 20 verbunden, die als Masseanschluß dient. Die entgegengesetzten Metallbeläge sind elektrisch mit einer Erregungs- und Auswerteschaltung 32 verbunden. Der Erregungswandler 28 ist so ausgebildet und angebracht, daß er beim Anlegen einer elektrischen Wechselspannung die Membran 20 in mechanische Schwingungen versetzt, die auf den äußeren Schwingstab 16 übertragen werden, so daß dieser Schwingstab Schwingungen quer zu seiner Längsrichtung ausführt. Der Empfangswandler 30 setzt mechanische Schwingungen der Membran 20 in eine elektrische Wechselspannung um, die zu der Erregungs- und Auswerteschaltung 32 übertragen wird.

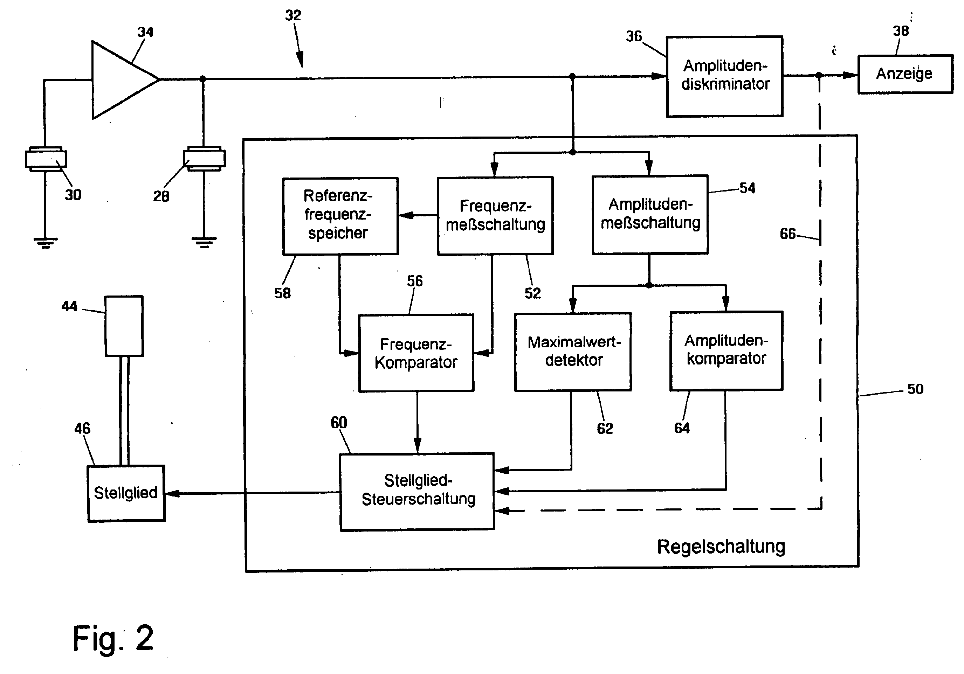

In Fig. 2 ist ein Blockschaltbild der Erregungs- und Auswerteschaltung 32 dargestellt. Diese Figur zeigt auch symbolisch den Erregungswandler 28 und den Empfangswandler 30. Der Empfangswandler 30 ist mit dem Eingang eines Verstärkers 34 verbunden, an dessen Ausgang der Erregungswandler 28 angeschlossen ist. Die vom Empfangswandler 30 erzeugte Wechselspannung, die die Frequenz der mechanischen Schwingungen des mechanischen Schwingsystems hat, wird vom Verstärker 34 verstärkt und dem Erregungswandler 28 zugeführt, der dadurch die Schwingungen des mechanischen Schwingsystems verstärkt. Somit liegen die beiden elektromechanischen Wandler 28, 30, die über das mechanische Schwingsystem miteinander gekoppelt sind, im Rückkopplungskreis des Verstärkers 34. Wenn die Verstärkung des Verstärkers 34 so groß ist, daß die Selbsterregungsbedingung erfüllt ist, erregt sich das mechanische Schwingsystem zu Schwingungen mit seiner Eigenresonanzfrequenz.

An den Ausgang des Verstärkers 34 ist ein Amplitudendiskriminator 36 angeschlossen, der ein Signal abgibt, das angibt, ob die Amplitude des am Ausgang des Verstärkers 34 abgegebenen Wechselspannungssignals, die zu der Schwingungsamplitude des mechanischen Schwingsystems proportional ist, über oder unter einem vorgegebenen Schwellenwert liegt. Das Ausgangssignal des Amplitudendiskriminators 36 wird einer Anzeige 38 zugeführt.

Die bisher beschriebene Vorrichtung arbeitet in folgender Weise: Wenn der äußere Schwingstab 16 nicht von dem Füllgut im Behälter bedeckt ist, kann er ungedämpft schwingen, und das mechanische Schwingsystem erregt sich zu Schwingungen mit seiner Eigenresonanzfrequenz. Diese Schwingungen haben eine maximale Amplitude, wenn die beiden Schwingungsgebilde in der zuvor beschriebenen Weise so aufeinander abgestimmt sind, daß sie die gleiche Resonanzfrequenz haben. Der Amplitudendiskriminator 36 stellt dann fest, daß die Amplitude der Ausgangswechselspannung des Verstärkers 34 über dem vorgegebenen Schwellenwert liegt, und die an den Ausgang des Amplitudendiskriminators 36 angeschlossene Anzeige 38 zeigt an, daß der zu überwachende Füllstand im Behälter nicht erreicht ist.

Wenn dagegen der äußere Schwingstab 16 vom Füllgut bedeckt wird, werden seine Schwingungen so stark gedämpft, daß die Amplitude der Ausgangswechselspannung des Verstärkers 34 unter den Schwellenwert des Amplitudendiskriminators 36 fällt oder sogar zu Null wird, weil die Schwingung ganz abreißt. Die Anzeige 38 zeigt dann an, daß der zu überwachende Füllstand erreicht oder überschritten ist.

Solange die Bedingung erfüllt ist, daß das innere Schwingungsgebilde 18, 22 die gleiche Resonanzfrequenz wie das äußere Schwingungsgebilde 16, 20 hat, erfolgt die Füllstandsüberwachung mittels des Sensors 10 mit großer Empfindlichkeit, weil im unbedeckten Zustand Schwingungen beträchtlicher Amplitude mit verhältnismäßig geringer Energie aufrechterhalten werden können und demzufolge die Schwingungsamplitude bereits bei geringfügiger Bedämpfung des äußeren Schwingstabs stark abfällt.

Dieser Idealzustand besteht jedoch nicht mehr, wenn sich am äußeren Schwingstab ein Ansatz von Füllgut bildet, wie er insbesondere bei zähflüssigen, klebrigen oder auch feuchten pulvrigen Füllgütern entstehen kann. Durch eine solche Ansatzbildung wird der Abgleich der Resonanzfrequenzen des inneren und des äußeren Schwingungsgebildes gestört. Die Resonanzfrequenz des äußeren Schwingungsgebildes verringert sich, weil dessen Massenträgheitsmoment $\theta_a$ größer wird. Dagegen bleibt die Resonanzfrequenz des inneren Schwingungsgebildes unverändert. Der Fehlabgleich hat zur Folge, daß die Schwingungsamplitude des mechanischen Schwingsystems und damit die Amplitude der vom Verstärker 34 abgegebenen Wechselspannung kleiner wird, auch wenn der Sensor 10 in Luft schwingt. Dadurch wird die Empfindlichkeit des Sensors 10 verringert, und es besteht die Gefahr von Fehlanzeigen, weil der Amplitudendiskriminator 36 nicht erkennen kann, ob die Verringerung der Schwingungsamplitude durch eine Ansatzbildung oder durch Bedeckung mit dem Füllgut verursacht wird.

Zur Vermeidung dieser Nachteile ist der in Fig. 1 dargestellte Sensor 10 so ausgebildet, daß die Abstimmung des äußeren Schwingungsgebildes 16, 20 und des inneren Schwingungsgebildes 18, 22 auf die gleiche Eigenresonanzfrequenz aufrechterhalten wird. Zu diesem Zweck ist am vorderen Ende des inneren Schwingstabs 18 ein Hohlraum 42 ausgebildet, in dem eine Kompensationsmasse 44 axial verschiebbar gelagert ist. Die Verstellung der Kompensationsmasse 44 erfolgt durch ein Stellglied 46 über eine axial durch den inneren Schwingstab 18 geführte Stange 48. Das Stellglied 46 wird von der Erregungs- und Auswerteschaltung 32 gesteuert.

Zur Einstellung der Kompensationsmasse 44 kann die Tatsache ausgenutzt werden, daß sich bei einer Änderung der Resonanzfrequenz des äußeren Schwingungsgebildes 16, 20 die Eigenresonanzfrequenz des gesamten mechanischen Schwingsystems ändert. Das mechanische Schwingsystem erregt sich daher über den Verstärker 34 zu Schwingungen mit dieser geänderten Eigenresonanzfrequenz, wobei jedoch diese Eigenresonanzschwingungen wegen des fehlenden Abgleichs zwischen den Eigenresonanzfrequenzen des äußeren und des inneren Schwingungsgebildes eine geringere Amplitude haben. Sobald die Erregungs- und Auswerteschaltung diese Änderung der Eigenresonanzfrequenz erkennt, veranlaßt sie das Stellglied 46, die Kompensationsmasse 44 in solcher Richtung zu verschieben, daß die Resonanzfrequenz des inneren Schwingungsgebildes 18, 22 an die Resonanzfrequenz des äußeren Schwingungsgebildes 16, 20 angeglichen wird. Wenn sich also die Resonanzfrequenz des äußeren Schwingungsgebildes 16, 20 infolge einer Ansatzbildung verringert, wird das Stellglied 46 von der Erregungs- und Auswerteschaltung 32 so angesteuert, daß es die Kompensationsmasse 44 zum freien Ende des Schwingstabs 18 hin nach außen verschiebt. Dadurch wird das Massenträgheitsmoment $\theta_i$ des inneren Schwingungsgebildes 18, 22 vergrößert, und dementsprechend verringert sich auch die Resonanzfrequenz des inneren Schwingungsgebildes 18, 22, bis schließlich die Gleichheit der Resonanzfrequenzen der beiden Schwingungsgebilde wiederhergestellt ist. Wenn sich dagegen die Resonanzfrequenz des äußeren Schwingungsgebildes 16, 20 bei einer Verringerung des Ansatzes wieder erhöht, wird die Kompensationsmasse 44 nach innen verschoben. Das Erreichen des Abgleichs kann in jedem Fall dadurch festgestellt werden, daß die Schwingungen des mechanischen Schwingsystems eine maximale Amplitude erreichen.

In Fig. 1 entspricht die in voller Linie gezeichnete Stellung der Kompensationsmasse 44 der höchsten Eigenresonanzfrequenz des inneren Schwingungsgebildes 18,22; in gestrichelten Linien ist die Kompensationsmasse 44' in der Stellung dargestellt, die der niedrigsten Eigenresonanzfrequenz des inneren Schwingungsgebildes 18, 22 entspricht.

Die Verschiebung der Kompensationsmasse 44 durch das Stellglied 46 kann auf verschiedene Weisen erfolgen, die für den Fachmann ohne weiteres ersichtlich sind. Beispielsweise kann die Stange 48 nach Art einer Schraubenspindel mit einem Schraubengewinde versehen sein, das in einer feststehenden Gewindebohrung läuft, und das Stellglied 46 kann ein Motor sein, der die Schraubenspindel in Drehung versetzt, so daß sich die Schraubenspindel zusammen mit der Kompensationsmasse in axialer Richtung bewegt. Die Gewindebohrung kann auch in der Kompensationsmasse 44 ausgebildet sein, wobei dann nur der innerhalb des Hohlraums 42 liegende Teil der Stange 48 als Schraubenspindel ausgebildet ist, so daß die Kompensationsmasse 44 entlang der Stange 48 wandert, wenn diese von dem Stellglied 46 in Drehung versetzt wird. Ferner kann die Stange 48 längsverschieblich in dem inneren Schwingstab 18 gelagert sein und von dem Stellglied 48 auf irgendeine geeignete Weise in der Längsrichtung verschoben werden.

In dem Blockschaltbild von Fig. 2 ist ein Ausführungsbeispiel einer Regelschaltung 50 dargestellt, die es ermöglicht, das mechanische Schwingsystem bei einer Änderung der Eigenresonanzfrequenz durch Verstellung der Kompensationsmasse 44 auf die maximale Amplitude der Eigenresonanzschwingungen abzugleichen.

Die Regelschaltung 50 enthält eine Frequenzmeßschaltung 52 und eine Amplitudenmeßschaltung 54, die beide das Ausgangssignal des Verstärkers 34 empfangen. Die Frequenzmeßschaltung 52 mißt laufend die Frequenz des Ausgangssignals des Verstärkers 34, die mit der momentanen Eigenresonanzfrequenz des Sensors 10 übereinstimmt. Der auf diese Weise gemessene Frequenzwert wird einem Frequenzkomparator 56 zugeführt, der außerdem einen Referenzfrequenzwert empfängt, der in einem Referenzfrequenzspeicher 58 gespeichert ist. Der Frequenzkomparator 56 vergleicht den von der Frequenzmeßschaltung 52 gemessenen Frequenzwert mit dem Referenzfrequenzwert, und er liefert ein von diesem Vergleich abhängiges Signal zu einer Stellgliedsteuerschaltung 60.

Die Amplitudenmeßschaltung 54 mißt laufend die Amplitude des Ausgangssignals des Verstärkers 34, die von der Amplitude der Eigenresonanzschwingung des mechanischen Schwingsystems abhängt, und sie liefert den gemessenen Amplitudenwert zu einem Maximalwertdetektor 62 und zu einem Amplitudenkomparator 64. Die Ausgänge des Maximalwertdetektors 62 und des Amplitudenkomparators 64 sind ebenfalls mit der Stellgliedsteuerschaltung 60 verbunden.

Die Regelschaltung 50 arbeitet in der folgenden Weise:

Die im Referenzfrequenzspeicher 58 gespeicherte Referenzfrequenz entspricht der zuletzt von der Frequenzmeßschaltung 52 gemessenen Eigenresonanzfrequenz, die das mechanische Schwingsystem des Sensors 10 hat, wenn es in Luft schwingt. Im Frequenzkomparator 56 wird die im Referenzfrequenzspeicher 58 gespeicherte Referenzfrequenz laufend mit der von der Frequenzmeßschaltung 52 gemessenen Frequenz verglichen. Solange wie sich die Eigenresonanzfrequenz des mechanischen Schwingsystems nicht ändert, sind die miteinander verglichenen Frequenzwerte gleich groß, und der Frequenzkomparator 56 liefert zu der Stellgliedsteuerschaltung 60 entweder kein Signal oder ein die Gleichheit anzeigendes Signal.

Wenn sich jedoch die Resonanzfrequenz des äußeren Schwingungsgebildes 16, 20 ändert, beispielsweise infolge einer Ansatzbildung, ist der von der Frequenzmeßschaltung 52 gemessene Frequenzwert nicht mehr gleich dem im Referenzfrequenzspeicher 58 gespeicherten Referenzfrequenzwert. Sobald die vom Frequenzkomparator 56 festgestellte Frequenzdifferenz einen vorbestimmten Mindestwert übersteigt, liefert der Frequenzkomparator 56 zu der Stellgliedsteuerschaltung 60 ein Signal, das die Ungleichheit anzeigt und auch erkennen läßt, in welcher Richtung sich die Resonanzfrequenz des äußeren Schwingungsgebildes verändert hat. Die Stellgliedsteuerschaltung 60 steuert das Stellglied 46 so, daß die Kompensationsmasse 44 in der Richtung verstellt wird, in der die Resonanzfrequenz des inneren Schwingungsgebildes 18, 22 an die neue Resonanzfrequenz des äußeren Schwingungsgebildes 16, 20 angenähert wird.

Infolge der Änderung der Resonanzfrequenz des äußeren Schwingungsgebildes und des dadurch verursachten Fehlabgleichs hat sich auch die Schwingungsamplitude verringert. Während der Verstellung der Kompensationsmasse steigt die von der Amplitudenmeßschaltung 56 gemessene Schwingungsamplitude wieder an. Sobald der Maximalwertdetektor 68 feststellt, daß die gemessene Schwingungsamplitude einen Maximalwert erreicht hat, liefert er zu der Stellgliedsteuerschaltung 60 ein Signal, das die weitere Verstellung der Kompensationsmasse 44 durch das Stellglied 46 beendet.

Das mechanische Schwingsystem ist nun bei der neuen Eigenresonanzfrequenz so abgeglichen, daß das äußere Schwingungsgebilde 16, 20 und das innere Schwingungsgebilde 18, 22 mit gleicher Resonanzfrequenz und mit maximaler Amplitude gegenphasig schwingen. Dadurch ist trotz der Ansatzbildung die optimale Empfindlichkeit des Sensors 10 wiederhergestellt.

Der Maximalwertdetektor 62 kann das Erreichen des Maximalwerts in der Regel nur dadurch feststellen, daß nach dem Überschreiten des Maximalwerts die Schwingungsamplitude wieder abzufallen beginnt. Die Anordnung ist daher vorzugsweise so ausgebildet, daß das vom Maximalwertdetektor 62 zur Stellgliedsteuerschaltung 60 gelieferte Signal jeweils nach dem Überschreiten des Maximalwerts eine Umkehr der Verstellrichtung bewirkt. Da das System eine geschlossene Regelschleife bildet, regelt es sich von selbst auf die Stellung ein, die der maximalen Schwingungsamplitude entspricht. Da die Ansatzbildung im praktischen Betrieb immer ein langsamer Vorgang ist, muß die Regelung nicht sehr schnell sein.

Der beschriebene Vorgang wiederholt sich in der gleichen Richtung, wenn der Ansatz am äußeren Schwingstab 16 zunimmt, und er läuft in umgekehrter Richtung ab, wenn sich der Ansatz, beispielsweise durch Entfernen oder Abfallen, verringert.

Wenn sich das System auf den Maximalwert der Schwingungsamplitude eingeregelt hat, wird die in diesem Zustand gemessene Eigenresonanzfrequenz von der Frequenzmeßschaltung 52 in den Referenzfrequenzspeicher 58 eingegeben und als neue Referenzfrequenz gespeichert. Anschließend wird die von der Frequenzmeßschaltung 52 gemessene Schwingungsfrequenz im Frequenzkomparator 56 mit der neuen Referenzfrequenz verglichen, und die zuvor beschriebene Verstellung der Kompensationsmasse 44 wird erneut eingeleitet, wenn die vom Frequenzkomparator 56 festgestellte Frequenzdifferenz wieder den vorgegebenen Mindestwert übersteigt.

Wenn der äußere Schwingstab 16 in das Füllgut im Behälter einzutauchen beginnt, darf natürlich kein Frequenzabgleich durch Verstellung der Kompensationsmasse 44 erfolgen. Hierzu wird die Tatsache ausgenutzt, daß das Eintauchen des Sensors 10 in das Füllgut von einer plötzlichen starken Verringerung der Schwingungsamplitude begleitet ist, die ja vom Amplitudendiskriminator 36 dazu ausgenutzt wird, das Erreichen des überwachten Füllstands zu erkennen. Diese Amplitudenverringerung kann, wie erwähnt, so beträchtlich sein, daß die Schwingung abreißt und erst wieder einsetzt, wenn der Sensor nicht mehr vom Füllgut bedeckt ist.

Der von der Amplitudenmeßschaltung 54 gemessene Amplitudenwert wird daher einem Amplitudenkomparator 64 zugeführt, der den gemessenen Amplitudenwert mit einem vorgegebenen Schwellenwert vergleicht. Wenn der gemessene Amplitudenwert unter dem Schwellenwert liegt, liefert der Amplitudenkomparator 64 zu der Stellgliedsteuerschaltung 60 ein Signal, das die Verstellung der Kompensationsmasse 44 verhindert. Die Verstellung der Kompensationsmasse 44 wird erst wieder freigegeben, wenn der gemessene Amplitudenwert wieder über dem Schwellenwert liegt.

Es wäre auch möglich, den Amplitudenkomparator 64 fortzulassen und statt dessen das Ausgangssignal des Amplitudendiskriminators 36 der Stellgliedsteuerschaltung 60 zur Freigabe bzw. Sperrung des Frequenzabgleichs zuzuführen, wie in Fig. 2 durch die gestrichelte Verbindung 66 angedeutet ist. Der Frequenzabgleich wird dann verhindert, wenn das Ausgangssignal des Amplitudendiskriminators 36 anzeigt, daß der Sensor 10 vom Füllgut bedeckt ist, und er wird freigegeben, wenn das Ausgangssignal des Amplitudendiskriminators 36 anzeigt, daß der Sensor 10 in Luft schwingt. Die Verwendung eines getrennten Amplitudenkomparators 64 ermöglicht jedoch eine empfindlichere Beeinflussung der Ansatzkompensation, indem die Verstellung der Kompensationsmasse bereits bei einer Amplitudenverminderung gesperrt wird, bei der der Amplitudendiskriminator 36 noch nicht anspricht. Es ist dann insbesondere auch möglich, den Schwellenwert des Amplitudenkomparators 64 in Abhängigkeit von dem jeweils zuletzt gemessenen Maximalwert einzustellen.

Es sind natürlich verschiedene Abänderungen der zuvor beschriebenen Ausführungsform möglich, die der Fachmann aufgrund seines Fachwissens nach Kenntnis des beschriebenen Grundprinzips der Ansatzkompensation ohne weiteres auffinden kann. So wäre es grundsätzlich möglich, die verstellbare Kompensationsmasse am äußeren Schwingstab anstatt am inneren Schwingstab anzubringen oder auch beide Schwingstäbe mit verstellbaren Kompensationsmassen zu versehen, doch wären solche Ausführungsformen technisch schwieriger zu realisieren.

**Patentansprüche**

1. Vorrichtung zur Überwachung eines vorbestimmten Füllstands in einem Behälter, mit einem durch ein mechanisches Schwingsystem gebildeten Sensor (10), der zwei Schwingstäbe (16, 18) aufweist, von denen wenigstens der eine Schwingstab (16) rohrförmig ist und den anderen Schwingstab (18) koaxial umschließt, wobei jeder der beiden Schwingstäbe über ein als Rückstellfeder wirkendes elastisches Halteteil (20) an einem gemeinsamen Träger so befestigt ist, daß er Schwingungen quer zu seiner Längsrichtungen ausführen kann, einer Erregungsanordnung (32), die die beiden Schwingstäbe in gegensinnige transversale Schwingungen mit der Eigenresonanzfrequenz des mechanischen Schwingsystems versetzt, und mit einer Auswerteschaltung (32) zur Auslösung von Anzeige- oder Schaltvorgängen in Abhängigkeit von der Schwingungsamplitude des mechanischen Schwingsystems des Sensors, **dadurch gekennzeichnet, daß** an wenigstens einem der Schwingstäbe eine Kompensationsmasse (44) in der Längsrichtung des Schwingstabs verstellbar angeordnet ist, und daß eine Einstellvorrichtung (46) zur Verstellung der Kompensationsmasse vorgesehen ist.

2. Vorrichtung nach Anspruch 1, **dadurch gekennzeichnet, daß** die Kompensationsmasse an dem inneren Schwingstab angeordnet ist.

3. Vorrichtung nach Anspruch 2, **dadurch gekennzeichnet, daß** der innere Schwingstab wenigstens an dem dem elastischen Halteteil abgewandten freien Endabschnitt rohrförmig ausgebildet ist und daß die Kompensationsmasse in dem rohrförmigen Endabschnitt verschiebbar gelagert ist.

4. Vorrichtung nach Anspruch 2 oder 3, **dadurch gekennzeichnet, daß** die Kompensationsmasse durch eine axial durch den Schwingstab verlaufende Stange mit einem außerhalb des Schwingstabs angeordneten Stellglied verbunden ist.

5. Vorrichtung nach einem der vorhergehenden Ansprüche, **dadurch gekennzeichnet, daß** mit dem mechanischen Schwingsystem ein elektromechanischer Empfangswandler verbunden ist, der die Schwingungen des mechanischen Schwingsystems in ein elektrisches Wechselsignal umsetzt, dessen Frequenz und Amplitude von der Schwingungsfrequenz und der Schwingungsamplitude des mechanischen Schwingsystems abhängen, und daß die Einstellvorrichtung in Abhängigkeit von dem Wechselsignal gesteuert wird.

6. Vorrichtung nach Anspruch 5, **gekennzeichnet durch** eine Regelschaltung, die das Wechselsignal empfängt und die Einstellvorrichtung in Abhängigkeit von der Amplitude des Wechselsignals derart steuert, daß diese die Kompensationsmasse zur Erzielung einer maximalen Amplitude verstellt.

7. Vorrichtung nach Anspruch 6, **dadurch gekennzeichnet, daß** die Regelschaltung eine Frequenzmeßschaltung enthält, die die Frequenz des Wechselsignals mißt und bei Feststellung einer Frequenzänderung die Verstellung der Kompensationsmasse auslöst.

8. Vorrichtung nach Anspruch 7, **dadurch gekennzeichnet, daß** die Regelschaltung einen Referenzfrequenzspeicher enthält, in dem die der letzten Einstellung der Kompensationsmasse entsprechende Resonanzfrequenz als Referenzfrequenz gespeichert ist, sowie einen Frequenzkomparator, der die von der Frequenzmeßschaltung gemessene Frequenz mit der gespeicherten Referenzfrequenz vergleicht und bei Feststellung einer einen vorbestimmten Mindestwert überschreitenden Frequenzdifferenz die Verstellung der Kompensationsmasse auslöst.

9. Vorrichtung nach Anspruch 7 oder 8, **dadurch gekennzeichnet, daß** die Regelschaltung eine Amplitudenmeßschaltung enthält, die die Amplitude des Wechselsignals mißt und bei Feststellung des Erreichens eines Amplitudenmaximums die Verstellung der Kompensationsmasse stillsetzt.

10. Vorrichtung nach Anspruch 9, **gekennzeichnet durch** einen Amplitudenkomparator, der die von der Amplitudenmeßschaltung gemessene Amplitude mit einem Schwellenwert vergleicht und die Verstellung der Kompensationsmasse verhindert, wenn die gemessene Amplitude unter dem Schwellenwert liegt.

**Claims**

1. Device for monitoring a predetermined filling level in a container, including a sensor (10) formed by a mechanical vibratory system comprising two vibratory rods (16, 18), of which at least one vibratory rod (16) is tubular and surrounds the other vibratory rod (18) coaxially, each of the two vibratory rods being secured to a common support via a resilient holding part (20) acting as a return spring so that it is able to execute vibrations transversely to its longitudinal directions, an excitation arrangement (32) causing the two vibratory rods to vibrate transversely in opposite senses at the natural resonant frequency of the mechanical vibratory system, and an evaluation circuit (32) for triggering display or switching actions as a function of the vibration amplitude of the mechanical vibratory system of the sensor, **characterised in that** a compensating mass (44) is arranged on at least one of the vibratory rods so as to be adjustable in the longitudinal direction of the vibratory rod, and **in that** an adjusting device (46) is provided for adjusting the compensating mass.

2. Device according to Claim 1, **characterised in that** the compensating mass is arranged on the inner vibratory rod.

3. Device according to Claim 2, **characterised in that** the inner vibratory rod is of tubular shape at least at the free end portion remote from the resilient holding part, and **in that** the compensating mass is displaceably mounted in the tubular end portion.

4. Device according to Claim 2 or 3, **characterised in that** the compensating mass is connected, by a bar extending axially through the vibratory rod, to an actuator arranged outside the vibratory rod.

5. Device according to one of the preceding claims, **characterised in that** an electromechanical receiving transducer is connected to the mechanical vibratory system, the receiving transducer converting the vibrations of the mechanical vibratory system into an electrical alternating signal having a frequency and an amplitude which depend on the vibration frequency and the vibration amplitude of the mechanical vibratory system, and **in that** the adjusting device is controlled as a function of the alternating signal.

6. Device according to Claim 5, **characterised by** a closed loop control circuit which receives the alternating signal and controls the adjusting device as a function of the amplitude of the alternating signal such that the adjusting device adjusts the compensating mass to achieve a maximum amplitude.

7. Device according to Claim 6, **characterised in that** the closed loop control circuit includes a frequency measuring circuit which measures the frequency of the alternating signal and triggers the adjustment of the compensating mass if a change in the frequency is detected.

8. Device according to Claim 7, **characterised in that** the closed loop control circuit includes a reference frequency memory in which the resonant frequency corresponding to the last setting of the compensating mass is stored as a reference frequency, and a frequency comparator which compares the frequency measured by the frequency measuring circuit with the stored reference frequency and triggers the adjustment of the compensating mass if a frequency difference exceeding a predetermined minimum value is detected.

**9.** Device according to Claim 7 or 8, **characterised in that** the closed loop control circuit includes an amplitude measuring circuit which measures the amplitude of the alternating signal and stops the adjustment of the compensating mass if the reaching of a maximum amplitude is detected.

**10.** Device according to Claim 9, **characterised by** an amplitude comparator which compares the amplitude measured by the amplitude measuring circuit with a threshold value and prevents the adjustment of the compensating mass if the measured amplitude is below the threshold value.

**Revendications**

**1.** Dispositif destiné à la surveillance d'un niveau prédéfini dans un récipient, à l'aide d'un capteur (10) constitué d'un système mécanique vibrant, qui comporte deux tiges vibrantes (16, 18), parmi lesquelles au moins une tige vibrante (16) est tubulaire et entoure l'autre tige vibrante (18) de façon coaxiale, chacune des deux tiges vibrantes étant fixée sur un support commun par l'intermédiaire d'une pièce de maintien (20) élastique, agissant en tant que ressort de rappel, de telle manière à pouvoir générer des vibrations perpendiculairement à son sens longitudinal, avec un circuit d'excitation (32), qui fait vibrer les deux tiges vibrantes selon des vibrations transversales en opposition de phase, à la fréquence de résonance propre du système mécanique vibrant, et avec un circuit d'exploitation (32) destiné au déclenchement de processus d'affichage ou de commande en fonction de l'amplitude de vibration du système mécanique vibrant du capteur, **caractérisé en ce qu'**une masse de compensation (44) est disposée de façon réglable dans le sens longitudinal sur au moins une des tiges vibrantes, et **en ce qu'**un dispositif de réglage (46) est prévu pour le réglage de la masse de compensation.

**2.** Dispositif selon la revendication 1, **caractérisé en ce que** la masse de compensation est disposée sur la tige vibrante intérieure.

**3.** Dispositif selon la revendication 2, **caractérisé en ce que** la tige vibrante intérieure est au minimum formée de façon tubulaire à l'extrémité libre située à l'opposé de la pièce de maintien élastique et que la masse de compensation est logée de façon mobile dans la section finale tubulaire.

**4.** Dispositif selon la revendication 2 ou 3, **caractérisé en ce que** la masse de compensation est reliée à l'organe de réglage disposé à l'extérieur de la tige vibrante, par l'intermédiaire d'une tige traversant axialement la tige vibrante.

**5.** Dispositif selon une des revendications précédentes, **caractérisé en ce qu'**un convertisseur de réception électromécanique est relié avec le système vibrant mécanique, lequel convertisseur convertit les vibrations du système vibrant mécanique en un signal alternatif électrique, dont la fréquence et l'amplitude dépendent de la fréquence de vibration et de l'amplitude de vibration, et que le dispositif de réglage est commandé en fonction du signal alternatif.

**6.** Dispositif selon la revendication 5, **caractérisé en ce qu'**un circuit de régulation, qui reçoit le signal alternatif et commande le dispositif de réglage en fonction de l'amplitude du signal alternatif de telle sorte que celui-ci déplace la masse de compensation en vue d'obtenir une amplitude maximale.

**7.** Dispositif selon la revendication 6, **caractérisé en ce que** le circuit de régulation contient un circuit de mesure de fréquence, qui mesure la fréquence du signal alternatif et déclenche le déplacement de la masse de compensation en cas de constatation d'un changement de fréquence.

**8.** Dispositif selon la revendication 7, **caractérisé en ce que** le circuit de régulation contient une mémoire de fréquence de référence, dans laquelle la fréquence de résonance correspondant au dernier réglage est mémorisée en tant que fréquence de référence, ainsi qu'un comparateur de fréquence, qui compare la fréquence mesurée par le circuit de mesure de fréquence avec la fréquence de référence mémorisée et, en cas de constatation d'une différence de fréquence dépassant une valeur minimale prédéfinie, déclenche le déplacement de la masse de compensation.

**9.** Dispositif selon la revendication 7 ou 8, **caractérisé en ce que** le circuit de régulation contient un circuit de mesure d'amplitude, qui mesure l'amplitude du signal alternatif et, en cas d'atteinte d'un maximum d'amplitude, neutralise le déplacement de la masse de compensation.

**10.** Dispositif selon la revendication 9, **caractérisé en ce qu'**un comparateur d'amplitude, qui compare l'amplitude mesurée par le circuit de mesure d'amplitude avec une valeur seuil et empêche le déplacement de la masse de compensation lorsque l'amplitude mesurée est inférieure à la valeur seuil.

Fig. 1

Fig. 2

EP 0 848 237 B1